# EUROPEAN PATENT SPECIFICATION

(11) **EP 3 020 284 B1**
(45) Date of publication and mention of the grant of the patent: **12.09.2018**
(21) Application number: 14380033.2
(22) Date of filing: 03.11.2014
(51) Int. Cl.: A23K 10/40, A23K 50/00, A23K 20/174, A23K 20/142, A23K 20/158, A23K 20/20, A23K 50/30, A23K 50/60

(54) **Supplementary feed for oral administration for reducing neonatal mortality of piglets**
Zusätzliches Futter zur oralen Verabreichung zur Reduzierung der Neugeborenensterblichkeit von Ferkeln
Alimentation supplémentaire pour l'administration orale pour réduire la mortalité néonatale de porcelets

(43) Date of publication of application: 18.05.2016
(73) Proprietor: LIPIDOS TOLEDO S.A., 28037 Madrid (ES)
(72) Inventor: Diaz Tizon, Maria, 28037 Madrid (ES); Martinez Sanchez, Antonio, 28037 Madrid (ES)
(74) Representative: De Pablos Riba, Juan Ramon

(56) References cited:
- EP-A2- 0 429 879
- BR-A2- PI0 805 588
- CA-A1- 2 688 613
- CN-A- 102 805 260
- US-A- 4 183 947
- FENG J ET AL: "The effect of iron glycine chelate on tissue mineral levels, fecal mineral concentration, and liver antioxidant enzyme activity in weanling pigs", ANIMAL FEED SCIENCE AND TECHNOLOGY, ELSEVIER, AMSTERDAM, NL, vol. 150, no. 1-2, 30 March 2009 (2009-03-30), pages 106-113, XP026031553, ISSN: 0377-8401, DOI: 10.1016/J.ANIFEEDSCI.2008.07.004 [retrieved on 2008-08-26]

## Description

### OBJECT OF THE INVENTION

The invention, as expressed in the title of this document, refers to a supplementary feed for oral administration for reducing neonatal mortality of piglets and to the process for obtaining it.

More specifically, the object of the invention is the development of a liquid supplementary feed for oral administration to recently born piglets with the purpose of reducing neonatal mortality, avoiding the effects of triple stress (thermal - energetic, immunological and ferric) that they may suffer. This feed essentially comprises fatty acids and plant and animal oils of between 45% and 65%, iron glycinate of between 5% and 15% for a concentration of Fe of between 10 and 30 mg/ml, stabilising and thickening agents of between 5% and 8%, liposoluble vitamins of between 1% and 3% and plant lecithins of between 2% and 5%. It also comprises preservatives of between 0.5% and 2.0%, colorants of between 0.1% and 0.2% and aqueous excipient of between 20% and 35% and probiotic and phytobiotic agents of between 0.1% and 0.8%.

A second aspect is the process for obtaining the feed, comprising making a sterilised solution of iron glycinate in a suitable reactor, mixing the oils, vitamins, lecithins and the other components not used in the preparation of the iron glycinate solution by stirring at a temperature of between 35 and 50 °C, homogenising the mixture and adding the solution of iron glycinate without stopping the stirring until obtaining a homogeneous product with a viscosity of between 800 and 1,400 cps.

### FIELD OF APPLICATION OF THE INVENTION

The field of application of this invention is within the veterinary chemical and pharmaceutical field, particularly in the scope of the industry for manufacturing supplementary feeds for animal nutrition such as dietary food supplements for newborn piglets.

### BACKGROUND OF THE INVENTION

The pig species is characterised by having a very high neonatal mortality percentage (deaths in the first seven days after birth) compared to other livestock species. Approximately between 10% and 20% of live-born piglets are affected, despite pig farming having one of the most modern animal production technologies, and this is one of the most important parameters in overall profitability of the farm.

This is mainly due to the nature of the piglet, which is born with some very marked physiological defects that prevent it from adapting to the new environment in the first 24-72 hours of life. However, other factors dependent on the sow also have a strong influence and these must be taken into account when managing and running the facilities in order to reduce the neonatal mortality rate.

Included in the factors that determine the high mortality rate are those affected by this invention: thermal, immunological and ferric stress (Maldonado, 2008).
- Thermal stress. The piglet is born without a protective layer of hair, with a very thin subcutaneous fat layer, with few body energy reserves that can be mobilised in the first few hours, with a very high body surface area and without a mature thermoregulatory system. All this results in low insulation of the piglet against the environmental temperature and causes a significant number of deaths due to heat loss or cooling and for hypoglycaemia.

Therefore, the survival rate of newborn piglets depends on the food intake in the first few hours of life. If they do not quickly ingest the maternal colostrum, which provides a large amount of energy due to its high fat content, piglets will tend to hypoglycaemia, followed by coma and subsequent death (Riart et al., 2000).
- Immunological stress. Piglets are born with a minimum immunity level because the pig has an epitheliochorial placenta and does not allow transfer of immunoglobulins during gestation. All immunoglobulins must be obtained by the piglet from the colostrum in the first few hours of life. For this reason, it is essential that the newborn piglet takes the maternal colostrum as it is the only source of passive immune protection and, therefore, the only source for acquiring the antibodies necessary to protect against pathogenic micro-organisms in the facility.
- Ferric stress. Piglets are born with few body iron reserves (40-50 mg, of which 47% are in the blood, 1.6% in the spleen, 15% in the liver and the remaining 44% are in other body tissues) so these barely meet the needs of the first 3 days. Added to this is the fact that the piglet has a high growth potential in the first stages of life and that during the first 2 or 3 weeks of life the piglet takes the sow's milk as the only food and this is poor in iron (1 mg/day/piglet). This makes it clear that there is a need to provide additional iron to avoid the appearance of the problem of anaemia.

The ability of the piglet to adapt to these three stresses will influence both its ability to survive and other production parameters during the fattening stage. Therefore, for the pig sector, it is vitally important to find solutions that are effective, economically sustainable and respect animal welfare in order to minimise the incidence of these three factors on neonatal mortality and on delays in starting growth.

The pig industry has introduced a large number of measures leading to reduction of piglet neonatal mortality. Each one of these helps to resolve one or several stress factors in piglets. However, none of them provide a comprehensive solution to the three factors just described above, which affect the viability of piglets in their first week of life.

Facilities and handling. Improvements in farrowing facilities, with cages that restrict the movements of the mother (reducing mortality from crushing), installation of heating systems (reducing deaths from hypothermia), mixed or cement floors for handling and care of piglets has reduced the mortality rate. However, the current data of between 10% and 15% mortality indicate that although they are effective they are not sufficient.

Genetics. Currently, there is some concern that the genetic selection under way (to increase muscle prolificacy and growth) can negatively affect piglet survival. Studies are being carried out in this respect to improve survival rates by applying selective reproduction techniques for pigs, but conclusive results have not been obtained.

Nutritional supplements. One of the techniques that has been most effective in reducing neonatal mortality in piglets has been the use of energy supplements, based on fatty acids and oils, for piglets with more difficulties. Supplementation with these types of products has been demonstrated to increase piglet weight gain in the first week of life and also to have an immunomodulating effect that helps animals combat infections (Cromwell, 2011).

CN 102 805 260 A discloses a feed for oral administration for reducing piglet neonatal mortality comprising fatty acids, plant and animal oils - fish oil and coconut oil, iron bis-glycinate, stabilizing and thickening agents - proteins from the skimmed milk powder and whey protein concentrate, liposoluble vitamins and emulsifiers. This invention includes a synergistic combination of oils high in omega 3 (EPA and DHA) to meet the energy needs of the piglet, as well as to promote their maturation. The addition of liposoluble vitamins and phospholipids potentiates this function. The inclusion of probiotic and phytobiotic agents in the invention strengthens its immunoprotective effect.

Administration of iron. Iron needs of newborn piglets are estimated at between 10 and 15 mg/day, for preventing a reduction in the amount of haemoglobin and therefore preventing delayed growth of piglets.

Traditionally, iron has been provided in the form of iron dextran injected into piglets after the third day of life. This form of application, although useful, poses major problems in terms of piglet management such as injuries at the point of injection, infections, spots at the site of inoculation and fundamentally transmission of diseases by contamination of water and syringes used in the application. The handling performed is also very stressful to the animals (Loh et al., 2001). To prevent the drawbacks of parenteral administration of iron, oral products have been developed in recent years in the form of liquid solutions, powders or pastes formulated using various iron compounds (organic and inorganic) with different excipients, different doses and posology.

The iron is absorbed in the gastrointestinal tract in the jejunum and duodenum and its bioavailability depends largely on the iron compound used.

Iron in organic form, chelated with amino acids, has been demonstrated to have greater oral bioavailability than inorganic compounds (Maes et al., 2011). Small molecules of chelated iron can easily cross the intestinal wall and enter the bloodstream.

The iron of this invention is a ferrous bis-glycinate, formed by one molecule of ferrous iron bound to two molecules of glycine. The iron is bound to the carboxyl group of the glycine by an anionic bridge and to an amino group by a covalent bond to form two heterocyclic rings. This structure protects the iron from interactions with dietary inhibitors of iron absorption, increasing its bioavailability.

That iron glycinate form is used in human medicine (Ferrochel®, Albion) for treating iron deficiencies due to its high bioavailability and rare gastric and intestinal side effects (Szarfarc et al., 2001).

The object of this invention, therefore, is to provide a means for improving piglet response to thermal and immunological stress at the same time as avoiding injection of iron to combat the problems of anaemia.

Moreover, it should be mentioned that the author of this patent application does not know of the existence of any other supplementary feed or similar invention that has similar constituent features to those presented and claimed here referred to in the current state of the art.

### DESCRIPTION OF THE INVENTION

This invention refers to a new supplementary feed for oral administration to newborn piglets for the purpose of reducing neonatal mortality and preventing the effects of triple stress (thermal - energetic, immunological and ferric).

The invention essentially comprises of the following:
- Fatty acids and plant and animal oils of between 45% and 65%,
- Iron glycinate of between 5% and 15% for a concentration of Fe of between 10 and 30 mg/ml,
- Stabilising and thickening agents of between 5% and 8%,
- Liposoluble vitamins of between 1% and 3% and
- Plant lecithins of between 2% and 5%.

It additionally preferably comprises:
- Preservatives of between 0.5% and 2.0%,
- Colorants of between 0.1% and 0.2% and
- Aqueous excipient of between 20% and 35%.
- Probiotic and phytobiotic agents of between 0.1% and 0.8%.

The fatty acids used in this invention are presented in liquid form and comprise medium and long chain acids (caproic, caprylic, lauric, oleic, linoleic, linolenic, etc.).

The oils used in this invention are presented in liquid form and span both plant oils (soy, wheat germ, sesame) and animal oils (cod liver, omega 3 concentrate from fish oils), and are digestible by newborn piglets. The total and relative percentage of each of the oils depend both on the final characteristics of the product and on the other components.

The iron glycinate is included in the form of an aqueous solution in a proportion of between 35% and 60% with glycinate content (iron content of between 15% and 30%) of between 15% and 35% to achieve the desired iron concentration in the final product (between 10 and 30 mg/ml).

The stabilising and thickening agents may be in solid or liquid form and these provide the texture required to avoid spilling from the mouths of the piglets. They may be plant gums (xanthan, guar, carob bean gum), alginates, glyceryl ricinoleates, polyoxyethylated ricin oils, polyethylene glycol 400, sorbitan esters, mono and diglycerides of fatty acids and polysorbates. The inclusion or not of each of these and their proportions depends on the percentages of the other components and on the viscosity required (between 800 and 1,400 cps).

The liposoluble vitamins are in liquid form and consist of retinyl palmitate or acetate, colecalciferol and tocopheryl acetate.

The lecithins are included in liquid form and are of plant origin (sunflower or soy).

The preservatives can be citric acid, sodium citrate, propionic acid, ammonium propionate or sodium propionate.

The colorants include caramel, Brown HT and erythrosine and their composition and proportion depend on the colouration and intensity desired.

The aqueous excipient is drinking water.

Saccharomyces cerevisiae, Enterococcus faecium, Lactobacillus plantarum, oregano and anise extracts and mixtures of these may be the probiotics and phytobiotics of the invention.

As previously indicated, this invention also refers to the process for obtaining the supplementary feed described, which comprises the following stages:
- Iron glycinate, preservative agents, stabilising agents and hydrophilic thickeners, colorants and water are introduced in a reactor with a heating and stirring system.
- The mixture is heated to a temperature of between 40 and 65 °C and stirred at a speed of between 1,000 and 3,500 rpm, depending on the concentration of iron glycinate and the stabilising and thickening agents. When fully mixed, the stirring speed is reduced to 500 to 750 rpm and the product maintained at 35 to 40 °C.
- The oils and fatty acids, stabilising and lipophilic thickening agents, vitamins, lecithins and the probiotic and phytobiotic agents are added into a mixer with heating, cooling, stirring and churning systems.
- The stirrer is started at a speed of between 1,000 and 1,500 rpm and the mixture is heated to a temperature of between 40 and 45 °C, and the mixture is stirred until fully homogeneous.
- The contents of the reactor are transferred to the mixer and the stirring is progressively increased to 2,500 to 4,000 rpm (depending on the degree of viscosity), maintaining the temperature at around 40 °C.
- When the mixture is fully homogenised (between 5 and 10 minutes), the cooling system is started and the stirring speed is reduced to 1,500 to 2,000 rpm and stirring is continued until a temperature of between 25 and 30 °C is reached.
- The churning system is started, and when the required texture is achieved, the product is packaged.

For best results, the dose of the feed described is 6 ml orally administered during the first four days of life. Preferably 2 ml is administered on the day of birth and 4 ml is administered during the third day.

Finally, the invention refers to the use of the feed described, which is specifically indicated for administration to newborn piglets in order to attenuate the negative effects of the difference between the body and environmental temperature, the low levels of fat/energy, the high iron demand and the immunological deficiencies of these animals. In summary, to provide piglets in their first days of life with a comprehensive solution against triple stress (ferric, thermal and immunological) and to generate better life expectancy and weight gain.

### EXAMPLES OF THE INVENTION

Three specific examples of the composition of the disclosed feed and one example of the process of obtaining the feed are described below, representing a practical case of manufacture, only for non-limiting and informational purposes.

**Example formula No. 1**

| | |
|---|---|
| - Citric acid | 4.50 g |
| - Iron glycinate 20% | 62.50 g |
| - Guar gum | 0.40 g |
| - Xanthan gum | 0.80 g |
| - Propionic acid | 5.00 g |
| - Sodium propionate | 2.00 g |
| - Ammonium propionate | 2.00 g |
| - Caramel | 0.80 g |
| - Water | 304.00 g |
| - Saccharomyces cerevisiae | 1.00 g |
| - Lactobacillus plantarum | 0.30 g |
| - Tocopheryl acetate | 10.00 g |
| - Sesame oil | 475.70 g |
| - Lauric acid | 13.00 g |
| - Oleic acid | 10.00 g |
| - Omega 3 concentrate | 21.00 g |
| - Soy lecithin | 30.00 g |
| - Retinyl acetate | 3.00 g |
| - Colecalciferol 1 million IU/g | 1.00 g |
| - Polysorbate 40 | 30.00 g |
| - Glyceryl monostearate | 3.00 g |
| - Sorbitan monolaurate | 10.00 g |
| - Hydrogenated ethoxylated ricin oil | 10.00 g |
| - Total | 1000.00 g |

**Example formula No. 2**

| | |
|---|---|
| - Citric acid | 8.00 g |
| - Iron glycinate 30% | 84.00 g |
| - Guar gum | 0.40 g |
| - carob bean gum | 0.80 g |
| - Sodium propionate | 10.00 g |
| - Brown HT | 1.00 g |
| - Water | 454.00 g |
| - Saccharomyces cerevisiae | 1.00 g |
| - Lactobacillus plantarum | 0.30 g |
| - Tocopheryl acetate | 10.00 g |
| - Soy oil | 272.00 g |
| - Cod liver oil | 57.00 g |
| - Soy lecithin | 35.00 g |
| - Retinyl acetate | 4.00 g |
| - Colecalciferol 1 million IU/g | 1.50 g |
| - Polysorbate 80 | 45.00 g |
| - Sorbitan monostearate | 8.00 g |
| - Glycerol ricinoleate | 8.00 g |
| - Total | 1000.00 g |

**Example formula No. 3**

| | |
|---|---|
| - Citric acid | 6.00 g |
| - Iron glycinate 24% | 75.00 g |
| - Xanthan gum | 1.30 g |
| - Ammonium propionate | 2.00 g |
| - Propionic acid | 8.00 g |
| - Brown HT | 1.00 g |
| - Water | 280.00 g |
| - Enterococcus faecium | 0.20 g |
| - Lactobacillus plantarum | 0.30 g |
| - Oregano oil | 1.50 g |
| - Tocopheryl acetate | 10.00 g |
| - Omega 3 concentrate | 20.00 g |
| - Wheat germ oil | 11.00 g |
| - Soy lethicin | 40.00 g |
| - Retinyl palmitate | 3.50 g |
| - Colecalciferol 1 million IU/g | 1.20 g |
| - Polyethylene glycol 400 | 5.00 g |
| - Polysorbate 80 | 20.00 g |
| - Polysorbate 20 | 5.00 g |
| - Sorbitan monolaurate | 12.00 g |
| - Glyceryl ricinoleate | 15.00 g |
| - Soy oil | 482.00 g |
| - Total | 1000.00 g |

A practical example of obtaining the feed, which corresponds to manufacturing a batch of 1,000 kg of formula No. 1 described above, is given below.
- 304.00 litres of water, 62.50 kg of 20% iron glycinate, 4.50 kg citric acid, 0.40 km guar gum, 0.60 kg xanthan gum, 5.00 kg of propionic acid, 2 kg of sodium propionate, 2.00 kg of ammonium propionate and 0.80 kg of caramel colorant were added to a reactor with a heating and a stirring system.
- The mixture was heated to a temperature of between 50 and 55 °C and was stirred at a speed of 2.500 rpm. When all the solid components were dissolved and the mixture homogenised (circa. 20 minutes), the stirring speed was reduced to 750 rpm and the mixture was maintained at 35 °C.
- 13.00 kg of lauric acid, 10.00 kg of oleic acid, 475.70 kg of sesame oil, 21 kg of omega 3, 30 kg of soy lecithin, 10.00 kg of vitamin E acetate, 3.00 kg of vitamin A acetate, 1.00 kg of vitamin D3 1 million IU/g, 30.00 kg of polysorbate 40, 3.00 kg of glyceryl monostearate, 10.00 kg of sorbitan monolaurate, 10.00 kg of ethoxylated hydrogenated ricin oil, 1.00 kg of Saccharomyces cerevisiae and 0.30 kg of Lactobacillus plantarum were added to a mixer with a heating and cooling, stirring and churning system.
- All the ingredients were mixed, setting the stirrer at a speed of 1,500 rpm, and heating to a temperature of 45 °C.
- When the mixture was fully homogenised, the contents of the reactor were transferred to the mixer and the stirring was increased slowly to 3,000 rpm, keeping the temperature at around 40 °C.
- When the mixture was fully homogenised, it was cooled to a temperature of 25 °C and the stirring speed was reduced to 1,800 rpm.
- Next, the churning system was started for five minutes and the mixture was packaged.

Comparing the invention with the products currently on the market, the novelty of the invention lies in the integrated approach to the various factors that influence the neonatal mortality rate with nutrients selected specifically to cover the needs of the piglets in the first days of life. These nutrients (oils, fatty acids, iron glycinate, vitamins and other components) have been shown to be useful in human and animal medicine for their individual effectiveness in solving specific problems. Their combination in a product for oral administration, which is highly palatable, which minimises piglet stress during administration and where the efficacy has been demonstrated, is a novelty in the sector of pig farming and has great potential for industrial application.

The feed disclosed improves the response of piglets against thermal and immunological stress because of its content of fatty acids and vitamins. This provides an increase in physiological maturity, energy, stimulation of appetite that increases the consumption of the mother's colostrum and results in improving immunity. At the same time it replaces the injection of iron for combating the problems of anaemia owing to its organic Fe content, preventing in this way the appearance of secondary injuries caused by this injection (spots, infections, etc.).

All this with minimum handling, as only three presses of the dispenser (in the first and third day of life) are required, provides a comprehensive solution against triple stress (ferric, immunological and thermal), increasing survival and the mean weight of the litters, as was found in the experimental results obtained in tests on the farm.

The nature of this invention has been sufficiently described, as well as the way of putting it into practice, so it is not considered necessary to extend the explanation further. Any expert in the field will be able to understand the scope of the invention and advantages deriving from it.

### BIBLIOGRAPHY

- Riart, G.R., Edwards S.A., and English P.R. (2000) Assessment of hypothermia in outdoor newborn piglets and comparison with an indoor system. In: Proceedings of the British Society for Animal Science 2000, 139.
- Maes D. et al. (2011) Comparison of oral versus parenteral iron supplementation on the health and productivity of piglets. Veterinary Record; 168:7 188. Published Online First: 15 February 2011.
- Gary L. Cromwell (2011). Nutritional Requirements of Pigs The Merck veterinary manual. http://www.merckmanuals.com/vet/management_and_nutrition/nutrition_pigs /nutritional_requirements_of_pigs.html#top.
- G.L. Allee and K.J. Touchette. Department of Animal Sciences, University of Missouri. Efectos de la nutrición sobre la salud intestinal y el crecimiento de lechones. [Effects of nutrition on the intestinal health and growth of piglets].
- Maldonado M. (2008). Percentage and causes of mortality of piglets during the period of lactation in an intensive pig production system. http://www.vetzoo.umich.mx/phocadownload/Thesis/2008/October/percenta ge%20y%20causes%20de%20mortality%20de%20piglets%20during%20el %20period%20de%20lactation%20en%20un%20systemm%20intensive%20 de%20production%20pig.pdf
- Loh T., Leong K., Too H., Mah C., Choo P. (2001) The effects of iron supplementation in preweaning piglets. Malays J Nutr. Mar;7(1):41-9.
- Szarfarc S.C., de Cassana L.M., Fujimori E., Guerra-Shinohara E.M., de Oliveira I.M. (2001) Relative effectiveness of iron bis-glycinate chelate (Ferrochel) and ferrous sulfate in the control of iron deficiency in pregnant women. Arch Latinoam Nutr. Mar;51(1 Suppl 1):42-7.
- Rossi R. , Pastorelli G., Cannata S. , Corino C. (2010). Recent advances in the use of fatty acids as supplements in pig diets: A review. Animal Feed Science and Technology Volume 162, Issues 1-2, Pages 1-11, November 25.

## Claims

1. SUPPLEMENTARY FEED FOR ORAL ADMINISTRATION FOR USE IN REDUCING PIGLET NEONATAL MORTALITY, caused by the triple stress-energetic, inmunological and ferric-that they suffer, **characterised in that** it comprises fatty acids, plant and animal oils of between 45% and 65%, iron glycinate of between 5% and 15%, stabilising and thickening agents of between 5% and 8% liposoluble vitamins of between 1% and 3%, plant lecithins of between 2% and 5%, preservatives of between 0.5% and 2.0% colorants of between 0.1% and 0,2%, probiotic and phytobiotic agents of between 0.1% and 0.8% and aqueous excipient of between 20% and 35%.

2. SUPPLEMENTARY FEED FOR USE according to claim 1, **characterised in that** the iron glycinate is added in the form of aqueous solution in a proportion of between 35% and 60%, providing an iron concentration of between 10 and 30g/l.

## Patentansprüche

1. ZUSÄTZLICHE ORGANISCHE FUTTERMITTEL ZUR VERWENDUNG ZUR VERRINGERUNG DER PIGLET-NEONATALMORTALITÄT, verursacht durch die dreifache Belastung - energetisch, inunmunologisch und eisenhaltig -, an der sie leiden, **dadurch gekennzeichnet, dass** sie Fettsäuren, pflanzliche und tierische Öle zwischen 45% und 65% enthält %, Eisenglycinat zwischen 5% und 15%, Stabilisierungs- und Verdickungsmittel zwischen 5% und 8% fettlösliche Vitamine zwischen 1% und 3%, Pflanzenlecithine zwischen 2% und 5%, Konservierungsmittel zwischen 0,5% und 2,0% % Farbstoffe zwischen 0,1% und 0,2%. probiotische und phytobiotische Mittel zwischen 0,1% und 0,8% und wässerige Exzipienten zwischen 20% und 35%.

2. Zusatz zur Verwendung nach Anspruch 1, **dadurch gekennzeichnet, dass** das Eisenglycinat in Form einer wässrigen Lösung in einem Anteil zwischen 35% und 60% zugegeben wird, wobei eine Eisenkonzentration zwischen 10 und 30 g / l bereitgestellt wird.

## Revendications

1. ALIMENTATION COMPLÉMENTAIRE POUR ADMINISTRATION ORALE DESTINÉE À ÊTRE UTILISÉE DANS LA RÉDUCTION DE LA MORTALITÉ NEONATALE DES PORCS, causée par la triple contrainte énergétique, immunologique et ferrique dont ils souffrent, **caractérisée en ce qu'**elle comprend des acides gras, huiles végétales et animales comprises entre 45% et 65% %, glycinate de fer entre 5% et 15%, stabilisants et épaississants entre 5% et 8% de vitamines liposolubles entre 1% et 3%, lécithines végétales entre 2% et 5%, conservateurs entre 0,5% et 2,0% % de colorants compris entre 0,1% et 0,2%. des agents probiotiques et phytobiotiques compris entre 0,1% et 0,8% et un excipient aqueux entre 20% et 35%.

2. ALIMENT COMPLEMENTAIRE D'UTILISATION selon la revendication 1, **caractérisé en ce que** le glycinate de fer est ajouté sous forme de solution aqueuse dans une proportion comprise entre 35% et 60%, fournissant une concentration en fer comprise entre 10 et 30g / I. - 1 -
